# EUROPEAN PATENT SPECIFICATION

(11) **EP 0 961 443 B1**
(45) Date of publication and mention of the grant of the patent: **13.08.2003**
(21) Application number: 98480041.7
(22) Date of filing: 29.05.1998
(51) Int. Cl.: H04L 12/56

(54) **Switching system comprising a mask mechanism for altering the internal routing process**
Vermittlungssystem mit einem Maskiermechanismus zur Änderung des internen Leitweglenkungsprozesses
Système de commutation comprenant un mécanisme de masquage pour changement de la procédé de routage interne

(43) Date of publication of application: 01.12.1999
(73) Proprietor: INTERNATIONAL BUSINESS MACHINES CORPORATION, Armonk, NY 10504 (US)
(72) Inventor: Blanc, Alain, 06140 Tourrettes sur Loup (FR); Brezzo, Bernard, 06100 Nice (FR); Saurel, Alain, 06100 Nice (FR)
(74) Representative: Etorre, Yves Nicolas

(56) References cited:
- EP-A- 0 652 685
- US-A- 5 430 720
- "MULTICAST/BROADCAST MECHANISM FOR A SHARED BUFFER PACKET SWITCH" IBM TECHNICAL DISCLOSURE BULLETIN, vol. 34, no. 10A, 1 March 1992, pages 464-465, XP000302372

## Description

### Technical Field of the invention

The invention relates to telecommunication and more particularly to a switching system comprising a mask mechanism for altering the internal routing process.

### Background art.

The invention brings an improvement to prior art switching systems based on a shared buffer, and particularly to the system disclosed in non published european patent applications n° 97480057.5, 97480056.7, 97480065.8, 96480129.4, 96480120.3 assigned to the Assignee of the present application (IBM Docket FR996040; IBM Docket FR996042; IBM Docket FR996043; IBM Docket FR996044; IBM Docket FR996045) which are herein incorporated by simple reference FR996040, 42-45).

Shared buffer switching is very useful for designed high-speed switches for routing small cells of data such as ATM cells having a reduced number of bytes - generally 53 bytes -. The high switching rate that is needed today thus requires the switching of a great number of data cells. The switching process is however limited by the physical storage of the buffer where the cells are stored prior to their routing to the appropriate port destinations. In case of multicasting the cell occupies its location within the shared buffer as long as the last duplication is still pending, which takes a relatively long time when a contention occurs in one port of the switch. In the system described in the above mentioned european applications, the shared buffer has a size of 128 locations used for the storage of the cells prior to their routing towards the appropriate output ports.

It is highly desirable to expand the capability of the switching architecture by possibly allowing the combination of some elementary switching modules. The above mentioned European applications describe the so called speed expansion, and port expansion architecture which respectively allow the expansion of the switching rate and the number of ports of the switching architecture. By multiplying the number of switching modules by two it is made possible to increase by two the speed of the swithcing architecture while, by multiplying by four the number of modules it is made possible to increase by a factor of two the number of ports of the switching architecture.

However, in these situations, the buffer still remains limited at 128 locations which inevitably limits the possibilities of the switch and increases the risks of contention.

US Patent US-A-5 430 720 (Telefonaktiebolaget LM Ericsson) entitled "Identification of Data Packets by Included Selected Bits" from Larsson Leif M et al., discloses a system for identifying data packets in switching equipment included in a telecommunication system and known as a packet switch. A plurality of incoming links are connected to the switching equipment via first switch ports, and a plurality of outgoing links are connected to the switching equipment via second switch ports. The equipment also includes control and coupling devices required to connect an incoming link with an indicated link, where the indication of an outgoing link is initiated by signals in the form of one or more data cells occurring on an incoming link. Additional information in the form of additional bits is delivered to the data cell in the first switch port and the additional bits are given a configuration which corresponds to the address information in the data cell. The additional bits are removed in the second switch port. The additional bits include a category identification and/or a function identification.

Publication entitled "Multicast/Broadcast Mechanism for a Shared Buffer Packet Switch", IBM Technical Disclosure Bulletin, vol.34, no.10A, 1 March 1992, pages 464-465, discloses a mechanism to effectively implement multicast/broadcast in a shared output-buffer packet switch. Because the buffer is shared, use of the buffer requires only one copy of the multicast/broadcast packet to be kept. In order to output one copy of a packet on more than one output of the switch, it is sufficient to keep only one copy of the original packet in the shared buffer until all copies have been transmitted on all indicated outputs. For that, 3 mechanisms are required in addition to the basic shared output-buffer packet switch mechanism :
- 1. a mechanism to derive a mask from the header of the incoming packet to determine which outputs will receive a copy of this packet.
- 2. a mechanism to provide each control queue of the outputs designated with a copy of the address where the multicast/broadcast packet resides in the shared output buffer.
- 3. a mechanism to determine when the copy of the multicast/broadcast packet in the shared output buffer is no longer needed.

### Summary of the invention

It is an object of the present invention to provide a switching architecture that can take benefit of the individual storage resources of first and a second switching systems in order to expand the capabilities of the switch.

It is another object of the present invention to provide a shared buffer switching architecture associating possibilities of speed expansion, port expansion and buffer expansion.

It is a further object of the present invention to provide a switching architecture that can aggregate individual switching systems in order to enhance the switching performance.

These and other objects are achieved by means of the invention as defined in the set of claims. The invention permits two individual shared buffer switching systems to be combined in such a way that the two elements can add their own buffer storage to provide a expanded buffer switching architecture. To achieve this, each system comprises a masking mechanism which is added to the traditional bitmap mechanism disclosed in the above mentioned pending application.

This mask mechanism permits to alter the original bitmap contained in the cell and characterizing the output port of the switching system where the cell should be routed. The mask mechanism is used for modifying, in accordance with the value of a Mask register, the bitmap which was originally received by the cell prior to the entrance into the switching system. When combining two switching systems that each incorporates a mask mechanism having complementary value, a mechanism of load balancing is achieved which permits the operator of the switch (Node Manager) to distribute the different Port Adapters between the two switching systems while permitting the addition of their buffer storage.

### Description of the drawings

Figures 1 and 2 illustrate the basic architecture of the invention using two shared buffer switching structures.
Figure 3A illustrates a synoptic view of an internal structure of a self-routing switching system that can be used in the preferred embodiment of the invention.
Figure 3B illustrates a block diagram of the mask circuit used for performing the filtering control field process acccording to the invention.
Figure 4 is a flow chart describing the Filtering Control Field process which is performed within each Switch core.

### Description of the preferred embodiment of the invention

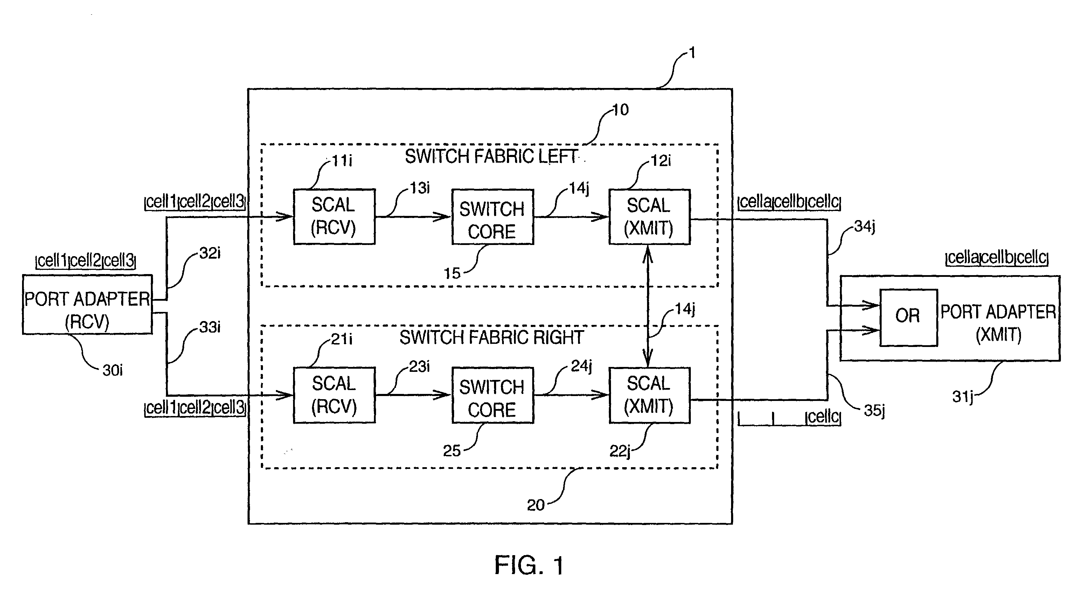

With respect to figure 1 there is shown a switch fabric structure capable of associating the storage capacity of two individual and identical switch Fabrics 10 and 20 that conforms, in the preferred embodiment of the invention, to the teaching of the above mentioned European patent applications. However, it should be noticed that the concept of the invention can be used with other embodiments of switches based on a shared buffer, particularly switch fabrics that include queuing resources at the output of the switching components. Each switch fabric 10 (resp. 20) includes a switch core 15 (resp. 25) which is generally located in one centralized building, and a set of Switch Core Access layers (SCAL) elements 11 and 12 (resp. 21 and 22) which are located at different points in accordance with the topology and the particular location of the telecommunication lines.
It should be noticed that the architecture that is shown in figure 1 corresponds to one particular port and that the real structure should be considered with the number of different ports. In the example, the receive side of the Switch Fabric is referenced with respect to the port i, and consequently the SCAL receive element is referenced 11-i (resp. 21-i) which corresponds to the input port i, attached to the port adapter 30-i. Figure 1 shows the architecture with respect to a output port j, and consequently SCAL Xmit element 12-j (resp. 22-j) corresponds to the output port j attached to the port adapter 31-j. From a functional point of view, a Port Adapter Receive 30-i produces a sequence of cells, which are simultaneously transmitted to the corresponding SCAL receive element 11-i in the Switch Fabric 10 through the link 32-i; and to the SCAL receive 21-i in the Switch Fabric 20 through the link 33-i. Generally speaking each SCAL receive element 11-i and 21-i is connected to their corresponding switch core via a set of n serializing links 13-i and 23-i permitting the communication between the different buildings wherein the switching structure is located. Similarly the two Switch Cores 15 and 25 are respectively connected to their corresponding SCAL transmit part 12-j and 22-j, via a set of n serialized links 14-j and 24-j. The cells which are produced by the two SCAL Xmit elements 12-j and 22-j are respectively transported through the links 34-j and 35-j to the Port Adapter (Xmit) 31-j.

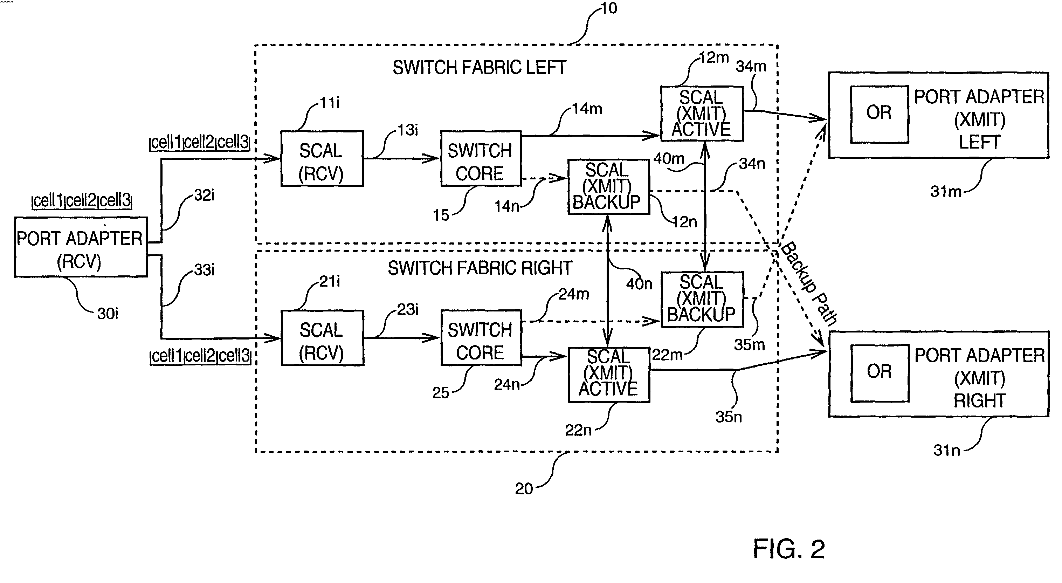

With respect to Figure 2 the structure of the switching architecture is illustrated. Basically, the invention uses a repartition of the output ports of the Switch Subsystem 1, and the Xmit Adapter elements in two groups: a group LEFT that will be assigned to SWITCH Fabric 10 (Left) and will normally receive the traffic cells from the latter; a group RIGHT that is affected to the SWITCH Fabric 20 and which normally receives the traffic cells from the latter. In the preferred embodiment of the invention, the load balancing of the data cells is achieved with two separate LEFT and RIGHT Switch Fabrics. However, it should be noticed that the system could be enhanced more by increasing the number of switching paths.

In the figure the Port adapter Xmit 31(m) is assigned to the Left group while the Port adapter Xmit 31(n) is included in the RIGHT Group.
Additionally, each Switch Fabric path, e.g. Switch Fabric 10, comprises SCAL Xmit elements that are divided into two groups - so called ACTIVE and BACKUP - corresponding to the repartition previously made of the PORT ADAPTER Xmit elements.
More particularly a PORT Adapter Xmit 31 (m) - that belongs to the LEFT group (assigned to the left switch path) is physically connected to a corresponding SCAL Xmit element 12(m) that belongs to the ACTIVE group of the Switch Fabric 10; and is further physically connected to a corresponding SCAL Xmit element 22(m) which belongs to the BACKUP group of the SWITCH Fabric 20.

Similarly, the PORT Adapter Xmit 31(n) that belongs to the RIGHT group assigned to the RIGHT Switch path is physically connected to a corresponding SCAL Xmit element 22 (n) that belongs to the ACTIVE group of the SWITCH Fabric 20; and is further physically connected to a corresponding SCAL Xmit element 12(n) which belongs to the BACKUP group of the Switch Fabric 10.

The above described repartition of the PORT Adapter Xmit elements permits an effective and simultaneous operating of the switch cores 15 and 25, thus associating their buffering resource. The repartition between the Port Adapter Xmit, decided by the Node manager, results in that the cells that are to be propagated to the Port Adapter Xmit 31(m) (belonging to the Left group) will be conveyed through Left Switch Core 15, to the SCAL Xmit element 12(m), while the same cell is duplicated by the PORT Adapter Receive 30 (i) and will be dropped by the Switch core 25. Conversely, the cells that are to be propagated to the Port Adapter Xmit 31(n) (belonging to the Right group) will be conveyed through Right Switch Core 25, to the SCAL Xmit element 22(n), while the same cell being duplicated at the level of the PORT Adapter Receive 30 (i) will be dropped by the Switch core 15. Therefore, the cells are being distributed through the two Right and Left Switch Fabrics in accordance with the repartition that was determined by the node manager.
This is achieved as followed:
In the best mode of the invention, the cells which are generated by the PORT Adapter Receive 30i are duplicated on the two serial links 32(i) and 33(i). It should be noticed that this duplication is involved up to the input of the Switch Core 15 and 25. This is very important because the two cores must receive the same cells so as to make sure that the control cells are also simultaneously received. In the European patent applications mentioned above, there is described that the switch core uses routing table which provides with the bitmap information that is used inside the core for controlling the routing process. That bitmap information is generally read from the contents of Control Routing tables that can be updated by means of Control cells. This is the reason why it is important, in this invention, that the same cells arrive at the input of each Switch Core. More particularly, as described in the above mentioned patent applications, PORT Adapter receive 30(i) generates a cell which comprises a Switch Routing Header (SRH) and a payload; the latter SRH including a two-bytes Routing Label characteristics of the destination of the cell, that is to say the Port Adapter Xmit in case of Unicast connection or the set of Port Adapter Xmit in case of multicast connection, as well as a one-byte Cell Qualifier. The cells is then received by the local SCAL Receive element 11(i) and 21(i), which latter introduces an additional set of two bytes that will be affected to the location of the bitmap that will be used for controlling the internal routing process inside the switch core 15 and 25. The cells are then remotely transported to the centralized Switch Cores 15 and 25, the latter comprising a Routing Control Device that uses the Routing Label for address a Routing Control table that provides with the appropriate two-bytes bitmap information that can then be used for the internal routing process inside the switch cores.

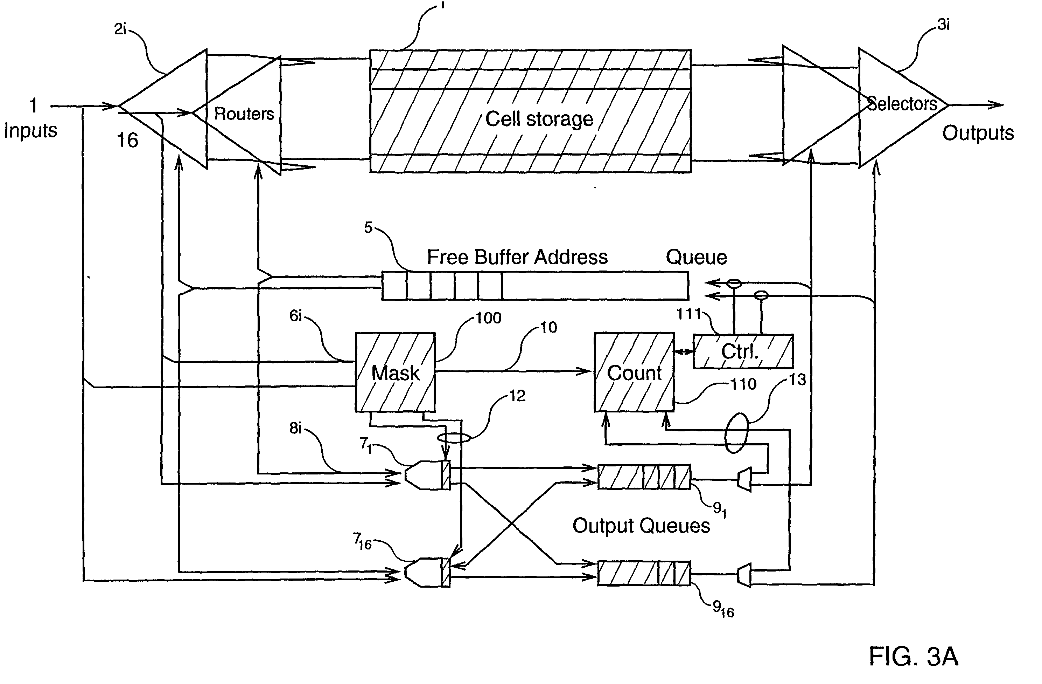

The essential feature of the present invention uses a mask mechanism within each Switch core for representing the distribution of the Port Adapters between the two Switch Fabrics. The mask mechanism processes the bitmap provided by the Routing Control device before the latter is used for controlling the routing process. Fig. 3A is a schematics view of the structure of a Switch core element forming the basis of the Switch core 15 or 25. A set of 16 input ports can provide cell into a Cell storage 1 via 16 corresponding routers 2-i. The cells can be extracted from the Cell storage and transferred to the output ports via 16 Selectors 3-i. When a cell is entered into the Switch element, a Free buffer Addresses is retrieved from a Free Buffer Address Queue 5, and the incoming cell is routed to the appropriate location within the Cell storage defined by the address that was extracted. Simultaneously, the Switch routing header is extracted from the incoming cell and transmitted through a bus 6-i to a Mask circuit 100. The latter Mask circuit 100 uses the SRH value provided in order to generate a corresponding 2 bytes mask value which will be provided to a set of 16 gating systems (only gating 7-1 and 7-16 being illustrated). At the input of the gating systems 7-i, via bus 8-i, there is presented the address where the cell is being loaded within Cell storage 1. That address is loaded into one or more Output Queues 9-1 to 9-16 corresponding to the appropriate output where the cell will have to be routed. When the cell is a multicast cell, the Mask circuit 100 provides to Count circuit 110 the number of duplication of the cell via bus 10.
The outgoing process involves the reading of an address in the Output Queue 9-i, corresponding to the address of storage of the cell within Cell storage 1. This address is then presented to the Selector 3-i and the cell can be shifted to the appropriate output i.
Bus 13 permits the transmission of that address to the Count circuit 110 which performs a decrementation operation corresponding to a single duplication of the cell. When the cell has been outputted to every appropriate output ports, the result of the decrementation is zero, what releases the address which becomes available for the storage of a new cell. At that moment, the released address can be loaded into the Free Address QUEUE 5 under control of circuit 111.

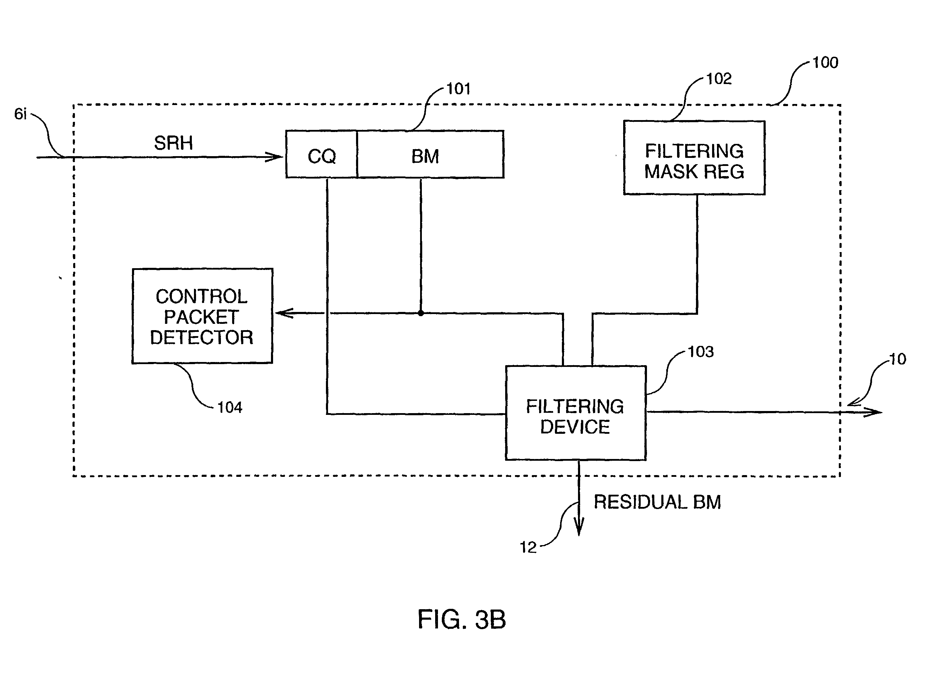

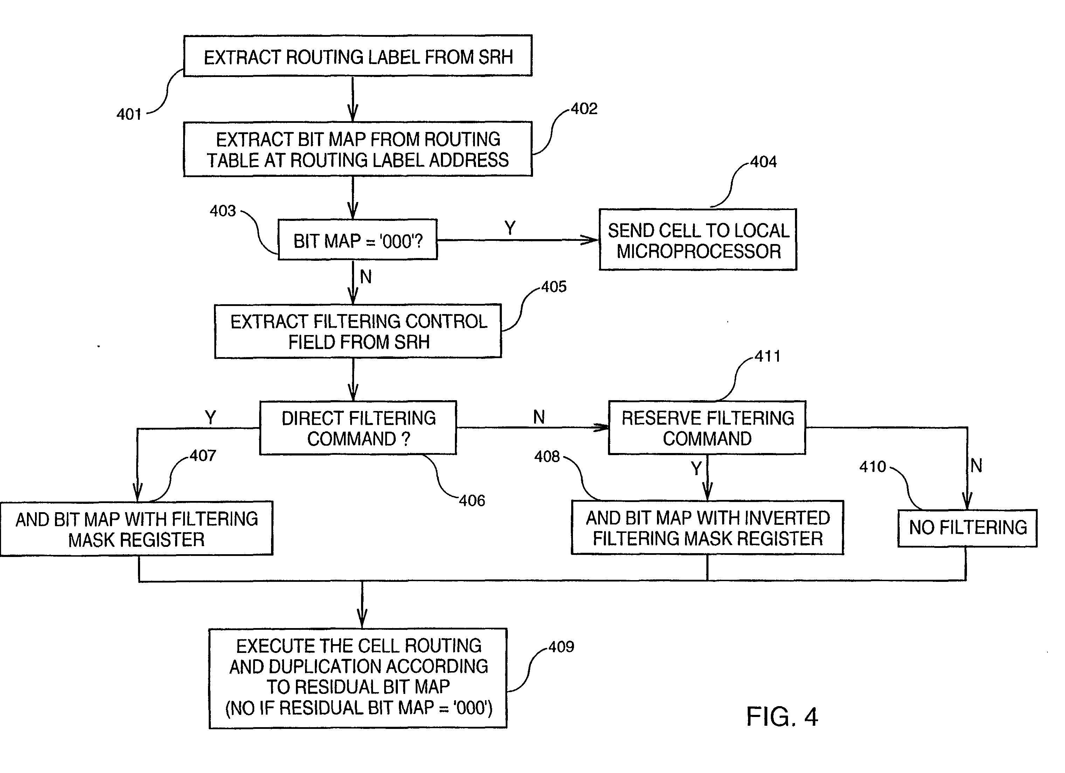

With respect to Figure 3B there is shown the preferred embodiment of the Mask circuit 100 which is used for performing the steps 403 to 409 of the Filtering Control Field process of figure 4. Basically, the SRH is loaded into a Register 101 via a bus 6-i, and a Filtering Mask Register 102 has been loaded by the control processor at the initialization of the circuit and contains the two-bytes mask that characterizes the distribution of the output ports in the two Left and Right groups. The detection of the Control packets (corresponding to step 403 of figure 4) is performed by circuit 104 which processes the contents of the bitmap field of Register 101. The Filtering Control Field in the Cell Qualifier Field is transmitted to the Filtering Device 103 with the value of the bitmap and that of the Filtering Mask register 102. The Filtering device can then provide with the residual bitmap that will be used by the gating circuits 7-1 to 7-16 so that the address of the cell being stored in Cell storage 1 is loaded into the appropriate Output Queues 9-i in accordance with the bitmap being carried by the cell, and processed in accordance with the Mask register contents. This achieves the cell routing in accordance with the Left and Right repartition of the output groups that were decided by the Node manager.

With respect to figure 4 there is shown the Distribution process that is used for permitting the control of the two Left and Right Switch Cores. This process is being performed in every Switch Core by Mask circuit 100 as shown in figure 3B.
The process in accordance with the present invention initiates with step 401 where the Routing label which is contained inside the SRH is extracted from the arriving cell. Then, in step 402, the Routing Label is used for addressing the Routing Table located inside the Switch Core, in order to extract the bitmap which is characteristics of the distribution of the considered cell to the appropriate output ports. It should be noticed that, since the same cell is received by the two Switch Core 15 and 25, step 402 causes the same value of bitmap to be extracted.
In step 403 a test is performed in order to determine whether the extracted bitmap is equal to all zero, which is, by convention, characteristics of a control cell which is destined to the local internal processor and so must be extracted from the flow of data in step 404. If the cell is not a control cell, the process proceeds to step 405 where a Filtering Control Field process is initiated. For that purpose , the above mentioned Cell Qualifier comprises two particular bits forming a Filtering Control field which are characteristics of the nature of the filtering operation which is desired for this specific cell.

If the Filtering Control field is characteristics of a Direct Filtering operation, as determined by the step 406, then the process proceeds with step 407 where the Bitmap which was previously extracted is logically ANDed with the contents of the Filtering Mask register shown in Figure 3. As mentioned above (with respect to Figure 3), the Filtering Mask register is designed to store a Mask value which is composed, in the preferred embodiment of the invention, of sixteen-bit, with each bit corresponding to one particular output port of the considered Switch core. At the initialization of the Switching architecture, as explained above, the Port Adapter Xmit were distributed in two RIGHT and LEFT Groups. Since the node Manager is aware of the topology of the Switching architecture, and particularly the physical correspondence between each Port Adapter Xmit - either Left or Right - and the output ports of each Switch core, the value of the mask can be determined as follows: for Switch core 15: for each output port the corresponding bit of the mask is set to one when the SCAL Xmit element 12 has been determined to be active, that is to say is designed to transmit the normal flow of data to the considered Port Adapter Xmit. In other words, the bit of the mask that is assigned to a given output port of the Switch core 15 is set to one when the Port Adapter Xmit LEFT receives the cell from that specific port. On the contrary, when the SCAL Xmit element is known to be BACKUP, the corresponding bit is set to a zero. Conversely, for Switch core 25, the bit of the mask that is assigned to a given output port of that Switch core is set to a one when the Port Adapter Xmit Right receives the cell from that specific port. On the contrary , when the output port communicates with a SCAL Xmit element known to be BACKUP, the corresponding bit is set to a zero.
It should be noticed that the Filtering Mask Register of the two Switch cores 15 and 25 always contain Mask values that are complementary, so as to ensure that a perfect distribution of the cells through the two Switch cores.

With respect to the process of Figure 4 again, when the test of step 406 shows that the nature of the Filtering Control Field is not characteristics of a direct filtering operation, the process proceeds with step 411. When the test of test 411 shows that the nature of the Filtering Control Field is characteristic of a reverse filtering operation, the process proceeds with step 408. Step 408, the Bitmap which was previously extracted is logically ANDed with the inverted value of the Filtering Mask Register. When the test of step 411 shows that the nature of the Filtering control Field is not characteristics of a reverse filtering operation the process proceeds to step 409 through step 410 (No operation).

Step 409 is performed at the completion of either step 407 or 408. The residual bitmap being masked in accordance with the above description is then used for controlling the internal routing of the cell inside the two Switch cores, and also permits the appropriate duplication of the cells in case of multicasting. It therefore appears that, in case of a cell carrying a Direct filtering command in its Filtering Control Field, that cell which is duplicated and provided to both Switch Fabric paths, is only transmitted (thanks to step 407) to the appropriate SCAL Xmit element which was determined by the node manager to be active. Conversely, for a Cell carrying a REVERSE filtering command in its Filtering Control Field, that cell which is duplicated and provided to both Switch Fabric pats, is only transmitted (thanks to step 408) to the appropriate SCAL Xmit element which was defined to be BACKUP.

In the present invention, the DIRECT Filtering Command is used for the normal traffic of data while the REVERSE Filtering Command is reserved for testing purpose of the Backup path in order to prevent the dramatic disastrous caused by hidden failures. To achieve this, with the Switching structure of the invention, testing cells can be periodically injected in the structure and are then transmitted through the backup Switch path in order to ensure the good operating of the latter. This entails the important advantage to allow a whole testing of the backup components of the Backup path, including the Backup SCAL Xmit elements and all the Backup links, to make sure that, when a breakdown will happen on one side of the Switching architecture, the only remaining Switch core will be able to switch the totality traffic of cells. Additionally, since the two Switch Cores are based on a output shared buffer architecture, as shown on figure 3, the active and backup path arrangement in accordance with the present invention permits to virtually increase the size of the shared Cell storage as far as this Cell storage is used by a lower number of output ports. This strongly improves the overall performance of the switch.

The invention is enhanced by an additional mechanism which permits to avoid that two cells, a first DIRECT cell carrying normal and a second REVERSE testing cell, simultaneously arrive at the same Port Adapter Xmit. This is achieved by means a control bus 40-j in Fig. 1 connecting the SCAL Xmit element 12-j , belonging to the Switch Fabric 10, to the SCAL Xmit element 22-j belonging to the Switch Fabric 20. Therefore, two corresponding ACTIVE and BACKUP SCAL Xmit element which are connected to a same Port Adapter Xmit can communicate via the same control bus 40-j.

Bus 40 has two main functions: a first function consisting of the synchronization of the cell clock of the Backup SCAL Xmit element 22m for instance with that of the clock of the ACTIVE SCAL Xmit element 12(m). In other words, the two links 34-m and 35-m have cell clocks which are synchronized. The characteristics of transmission of the two busses 34-m and 35-m ensures that the synchronism is maintained up to the input of the Port Adapter Xmit 31-m, what is generally the case when links 34-m and 35-m have the same physical length. When the Backup SCAL Xmit element 22-m wishes transmit a cell on bus 35-m, the latter sends a request on bus 40m to its associated ACTIVE Scal Xmit element 12-m. That request is received by ACTIVE Scal Xmit element 12-m which inhibits the transmission of the cell which would normally be transmitted at the next cell cycle. Concurrently ACTIVE Scal Xmit element 12-m produces an Acknowledge signal to its associated Backup Scal Xmit element 22-m on bus 40-m, what informs the latter that it is allowed to use the link 35-m to convey the pending cell at the next cell cycle. Each of the above two ACTIVE and BACKUP mechanisms are enabled in response to the contents of a register defined, under control of the Node manager, the appropriate status of the SCAL Xmit element. The mechanism thus prevents the simultaneous arrival of two cells at the same Port Adapter Xmit and entails a substantial advantage since the Port Adapter Xmit can be designed to support only its nominal throughput. Without that mechanism it would have been necessary to use adapters being capable of supporting at least twice the nominal throughput, what would have strongly increased the cost and complexity .

## Claims

1. Switching architecture comprising:
two switching systems, each switching system receiving data cells from a set of n input ports and to be routed to one or more output ports in accordance with the contents of a bitmap value introduced in the cell at the entrance of a module, said module comprising a shared buffer for storing the cells which are to be routed, each switching system comprising an additional mask mechanism with a mask register for altering the value of the bitmap before it is used for controlling the routing process, whereby the cell can be either transported to the output ports or disregarded;
said two switching systems respectively forming a first and a second Switch Fabrics (10, 20) including each switch core (15, 25) located in a centralized building and a set of Switch Core Access Layer (S.C.A.L.) elements distributed in different physical areas; each SCAL element respectively comprising a SCAL Receive element (11-i) and a SCAL Xmit element (12-i) for respectively permitting access to a corresponding input and output port of one of said switch core;
a set of Port Adapters (30; 31) distributed at different physical areas, each being connected to said first and second Switch Fabrics via a particular SCAL element so that each Switch core (15, 25) receives the sequence of cells coming from any Port adapter and conversely any Port adapter may receive data from anyone of said first or second switch cores;
said masking mechanism permitting the distribution of said first and second switch cores (15, 25) between the different attached Port adapters.

2. Switching architecture according to claim 1 **characterized in that** each output port is associated with an output queue which stores the succession of addresses corresponding to the location of the different cells loaded in said buffer prior to their extraction and delivery to the considered output port.

## Patentansprüche

1. Vermittlungsarchitektur, folgendes umfassend:
zwei Vermittlungssysteme, wobei jedes Vermittlungssystem Datenzellen von einer Gruppe von n Eingangsports empfängt und die Datenzellen an einen oder mehrere Ausgangsports geleitet werden müssen, entsprechend dem Inhalt eines Bitmap-Werts, der am Eingang eines Moduls in die Zelle eingefügt wird, wobei das genannte Modul einen Gemeinschaftspuffer zum Speichern der weiterzuleitenden Zellen umfasst, jedes Vermittlungssystem einen zusätzlichen Maskiermechanismus mit einem Maskierregister zum Ändern des Werts der Bitmap umfasst, bevor sie zur Steuerung des Leitweglenkungsprozesses eingesetzt wird, wodurch die Zelle entweder zu den Ausgangsports transportiert oder vernachlässigt werden kann;
die genannten beiden Vermittlungssysteme jeweils eine erste und eine zweite Vermittlungsstruktur (10, 20) bilden, die jeweils einen Vermittlungskern (15, 25) enthalten, der sich in einem zentralen Gebäude befindet, und eine Gruppe von Elementen einer Switch Core Access Layer (SCAL), die in verschiedenen physikalischen Bereichen verteilt sind; jedes SCAL-Element umfasst jeweils ein SCAL-Empfangselement (11-i) und ein SCAL-Sendeelement (12-i), um jeweils Zugang zu einem entsprechenden Eingangs- und Ausgangsport eines der genannten Vermittlungskerne zu ermöglichen;
eine Gruppe von Portadaptern (30; 31), die in unterschiedlichen physikalischen Bereichen verteilt sind, die jeweils über ein bestimmtes SCAL-Element mit der genannten ersten und zweiten Vermittlungsstruktur verbunden sind, so dass jeder Vermittlungskern (15, 25) die Zellensequenz empfängt, die aus einem Portadapter kommt, und umgekehrt jeder Portadapter Daten entweder aus einem der ersten oder der zweiten Vermittlungskerne empfangen kann;
der genannte Maskiermechanismus die Verteilung des genannten ersten und zweiten Vermittlungskerns (15, 25) zwischen den verschiedenen angeschlossenen Portadaptern ermöglicht.

2. Vermittlungsarchitektur nach Anspruch 1, **dadurch gekennzeichnet, dass** jeder Ausgangsport mit einer Ausgangswarteschlange verbunden ist, welche die Reihenfolge der Adressen speichert, die dem Platz der verschiedenen Zellen vor ihrer Entnahme aus und Lieferung an den betreffenden Ausgangsport entspricht.

## Revendications

1. Architecture de commutation comprenant :
deux systèmes de commutation, chaque système de commutation recevant des cellules de données provenant d'un ensemble de n ports d'entrée et devant être routées vers un ou plusieurs ports de sorties suivant le contenu d'une valeur d'image-point introduite dans la cellule à l'entrée d'un module, ledit module comprenant un tampon partagé servant à stocker les cellules qui doivent être routées, chaque système de commutation comprenant en outre un mécanisme de masquage comportant un registre de masquage permettant de modifier la valeur de l'image-point avant qu'elle ne soit utilisée pour commander le routage, grâce à quoi la cellule peut être soit transportée vers les ports de sortie, soit ignorée ;
lesdits deux systèmes de commutation formant respectivement un premier et un deuxième Tissus de Commutation (10, 20) incluant chacun un tore de commutation (15, 25) situé dans une construction centralisée et un ensemble d'éléments des Couches d'Accès au Tore de Commutation (SCAL), répartis dans différentes zones physiques ; chaque élément SCAL comprenant respectivement un élément de réception SCAL (11-i) et un élément de transmission SCAL (12-i) permettant respectivement d'accéder à un port d'entrée et un port de sortie correspondants de l'un desdits tores de commutation ;
un ensemble d'Adaptateurs de Ports (30 ; 31) répartis sur différentes zones physiques, chacun étant connecté auxdits premier et deuxième Tissus de Commutation par le biais d'un élément SCAL particulier, de telle sorte que chaque tore de commutation (15, 25) peut recevoir la séquence de cellules arrivant de n'importe quel adaptateur de port et inversement, n'importe quel adaptateur de port peut recevoir des données provenant de n'importe lequel desdits premier et deuxième tores de commutation ;
ledit mécanisme de masquage permettant la distribution desdits premier et deuxième tores de commutation (15, 25) entre les différents adaptateurs de ports qui y sont rattachés.

2. Architecture de commutation selon la revendication 1, **caractérisée en ce que** chaque port de sortie est associé à une file d'attente de sortie qui stocke la suite des adresses correspondant aux emplacements des différentes cellules chargées dans ledit tampon avant leur extraction et leur livraison au port de sortie considéré.
